# EUROPEAN PATENT SPECIFICATION

(11) **EP 2 974 983 B1**
(45) Date of publication and mention of the grant of the patent: **04.08.2021**
(21) Application number: 13863110.6
(22) Date of filing: 10.12.2013
(51) Int. Cl.: B65D 85/812, B65D 85/808, A47G 19/16, A47J 31/20, A47G 19/22

(54) **BREWING ARTICLE CLADDING STRUCTURE**
VERKLEIDUNGSSTRUKTUR FÜR EINEN BRAUARTIKEL
STRUCTURE DE REVÊTEMENT D'ARTICLE D'INFUSION

(30) Priority: 10.12.2012 CN 201220679295 U
(43) Date of publication of application: 20.01.2016
(73) Proprietor: Tseng, Yipin, Taipei 10682 (TW)
(72) Inventor: Tseng, Yipin, Taipei 10682 (TW)
(74) Representative: Cabinet Chaillot
(86) International application number: PCT/CN2013/089010
(87) International publication number: WO 2014/090141

(56) References cited:
- EP-A1- 1 495 992
- CN-U- 203 106 562
- CN-U- 203 111 819
- DE-A1-102008 016 389
- US-A- 1 723 702
- US-A- 2 284 087
- US-A1- 2003 170 345
- None

## Description

### BACKGROUND OF THE INVENTION

### 1. Field of the Invention

The invention relates to a brewing substance packaging structure and, more particularly, a brewing substance packaging structure that may be formed a contraction shape by pulling a rope body.

### 2. Description of Related Art

Brewing tea bag has some advantages, such as a fixed amount of tea leaves, no tea dust, easy cleaning, so it is widely used in various work places or hospitality venues. A conventional packaging structure is putting tea leaves inside a small packaging bag, and a rope with appropriate length is set between an upper edge of the bag and a paper piece for putting outside the cup. The above-mentioned small packaging bag is usually designed as a flat or pyramid shape, so that multiple tea bags may be packed as a smaller volume of package.

However, a conventional tea bag may only be maintained original shape during using process, cannot be adjusted through a rope. Thus, designers may be affected by the established concept that the shape of a conventional tea bag is fixed and unable to adjust, so that the design of tea bag may be obstructed, and the application of tea bags may be limited. The inventor considered that the above drawbacks may be improved, so he researched with the use of theoretical knowledge and then mentioned the well-designed present invention that may improve the above-mentioned drawbacks.

US 2 284 087 A discloses a brewing substance packaging structure according to the preamble of claim 1.

### SUMARRY OF THE INVENTION

The object of the present invention is to provide a brewing substance packaging structure, which may be formed a contraction shape by pulling a rope body.

The present invention is as defined in claim 1, and provides a brewing substance packaging structure, which is used to place a brewing substance inside for brewing and suitable to be hanged on a plate body with a through hole, the brewing substance packaging structure includes: a covered part provided for water flowing through, and the brewing substance is placed inside; a positioning body, which is a structure being switched to a passing mode or a stop mode, the positioning body is provided to pass through the through hole from a side of the plate body to another side of the plate body when the positioning body is switched to the passing mode, the positioning body is not adapted to pass through the through hole of the plate body when the positioning body is switched to the stop mode; and a rope bodyhaving a first end fixed to the covered part and a second end fixed to the positioning body, the positioning body is used to pass through the through hole of the plate body and be adjusted between a first position and a second position, so that the rope body is movably set inside the through hole of the plate body; wherein, when the positioning body is located in the first position, the positioning body is driven by gravity of the covered part, so that the plate body touches the positioning body with the through hole part; when the positioning body is located in the second position, the positioning body is adjusted with a specific distance to the through hole, and the covered part is pulled by the rope body and press the plate body to form a compression shape, characterized by the fact that the first end of the rope body is passed through one side of the covered part and fixed to another side of the covered part, and the covered part includes: a folded body, which is hollow and may be stretched along a stretching direction, a section of the folded body vertical to the stretching direction is ring shape, and a fold line unit is formed on the folded body; and an upper lid body and a lower lid body, which are respectively set on a top and a bottom of the folded body, a positioning hole is formed on the upper lid body, the rope body is passed through the positioning hole of the upper lid body and fixed to the bottom of the covered part; wherein, when the positioning body is adjusted between the first position and the second position, the relative position of the upper lid body and the lower lid body is simultaneously adjusted by moving the rope body, and the folded body is provided to be stretched or folded along the stretching direction through the fold line unit.

Preferably, the first end of the rope body passes through the top pf the folded body to the bottom of the folded body, when the positioning body is located in the second position, the covered part is clamped by its bottom and the plate body due to pull of the rope body, so that the volume of the covered part is smaller than the volume of the covered part when the positioning body is located in the first position, or, the covered part is pulled by the rope body to press the plate body, so that when the positioning body located in the second position, the distance between the two sides of the covered part corresponding to the rope body is smaller than the distance that when the positioning body located in the first position.

Above all, the brewing substance packaging structure according to the present invention, which includes the structure that may control the covered part going up and down and adjust its appearance, whereby the brewing substance packaging structure may meet users' needs more.

### BRIEF DESCRIPTION OF THE DRAWINGS

FIG. 1 is a three-dimensional schematic diagram according to the present invention;
FIG. 2 is a cross-sectional schematic diagram of the positioning body located in the second position according to the present invention;
FIG. 3 is a cross-sectional schematic diagram of the positioning body located in the first position according to the present invention;
FIG. 4 is a three-dimensional schematic diagram of the positioning part formed on the annular side wall according to the present invention;
FIG. 5 is a cross-sectional schematic diagram of the positioning part being a notch according to the present invention;
FIG. 6 is a cross-sectional schematic diagram of the positioning body being in the passing mode according to the present invention;
FIG. 7 is a cross-sectional schematic diagram of the positioning body being an elastic body in the passing mode according to the present invention;
FIG. 8 is a cross-sectional schematic diagram of the positioning body being an elastic body in the stop mode according to the present invention;
FIG. 9 is a exploded schematic diagram of the brewing substance packaging structure according to the present invention;
FIG 10 is a cross-sectional schematic diagram of the packaging spherical pieces
FIG. 11 is a three-dimensional schematic diagram of the rope body wound around the positioning part according to the present invention;
FIG. 12 is a three-dimensional schematic diagram of the positioning body longitudinally passed through and fixedly buckled to the positioning part according to the present invention;
FIG. 13 is a three-dimensional schematic diagram of the positioning body embedded into the positioning part according to the present invention;
FIG. 14 is a three-dimensional schematic diagram of the positioning body transversely passed through and fixed to the positioning part according to the present invention;
FIG. 15 is a cross-sectional schematic diagram of the covered part without the limiting body according to the present invention; and
FIG. 16 is a schematic diagram of the covered part being a flat bag according to the present invention.

### DESCRIPTION OF THE MAIN ELEMENTS AND SYMBOLS

- 100: brewing cup set
- 1: cup body
- 11: cup body space
- 2: lid
- 21: plate body (such as a top wall)
- 211: through hole
- 212: outlet
- 22: annular side wall
- 23: lid space
- 24: positioning part
- 241: block
- 242: groove
- 243: notch
- 3: brewing substance packaging structure
- 31: rope body
- 32: positioning body
- 33: covered part (such as a tea bag)
- 331: folded body
- 3311: fold line unit
- 3312: opening
- 3313: opening
- 332: upper lid body
- 3321: positioning hole
- 333: lower lid body
- 3331: positioning hole
- 334: limiting body
- C: stretching direction

### DETAILED DESCRIPTION OF THE INVENTION

In order to further understand features and technical contents of the present invention, please refer to following detailed description and accompanying drawings according to the present invention. However, the drawings are only provided for reference and illustration, not for limiting the scope of the present invention.

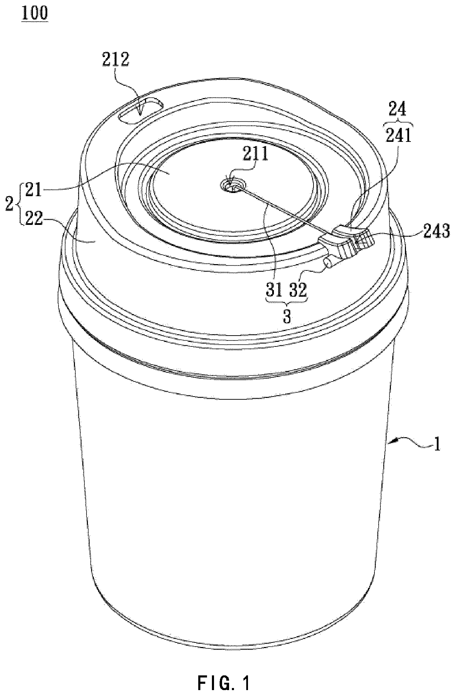

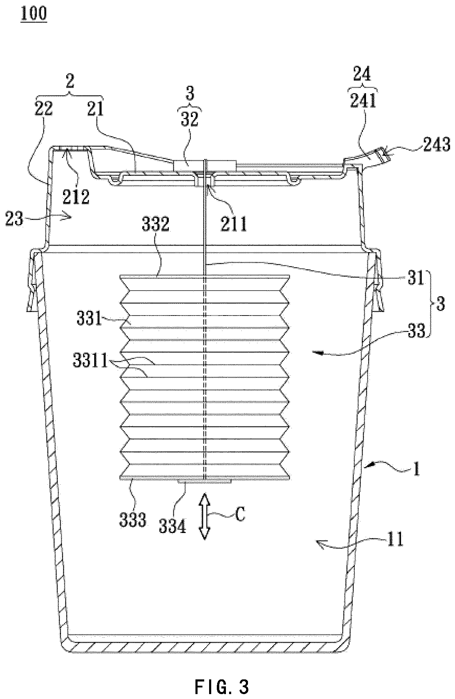

Please refer to FIG. 1 ∼ FIG. 3, the present invention is intended to provide a brewing substance packaging structure 3, which is used to place a brewing substance inside for brewing and suitable to be hanged on a plate body 21 with a through hole 211.

For illustration, the brewing substance packaging structure 3 is described by a practical embodiment according to the present invention, wherein, the above-mentioned plate body 21 is equivalent to a top wall 21 of a lid 2 mentioned as follows, but the scope of the plate body 21 is not limited to the lid 2.

The embodiment provides a brewing cup set 100, which includes a cup body 1, a cup lid 2 and a brewing substance packaging structure 3. Wherein, a cup body space 11 provided to be filled with hot water is limited by an inner wall of the above cup body 1, the cup body 1 and the lid 2 may be buckled together, and the above brewing substance packaging structure 3 is hanged on the lid 2.

First, it should be noted that, since the brewing cup set 100 has various implementations, only part of implementations are illustration as example in the embodiment, but not limited to.

The following mainly introduces preferred implementations of the brewing cup set 100. During introduction, other possible implementations may be timely described; or, after introducing preferred implementations of the brewing cup set 100, related implementations of other brewing cup set 100 may be listed.

A plate body 21 is formed on the lid 2 (for illustration, the following plate body 21 is replaced by the top wall 21) and an annular side wall 22 is extended along the same side from a peripheral edge of the top wall 21, so that a lid space 23 surrounded by an inner edge of the lid 2 is defined.

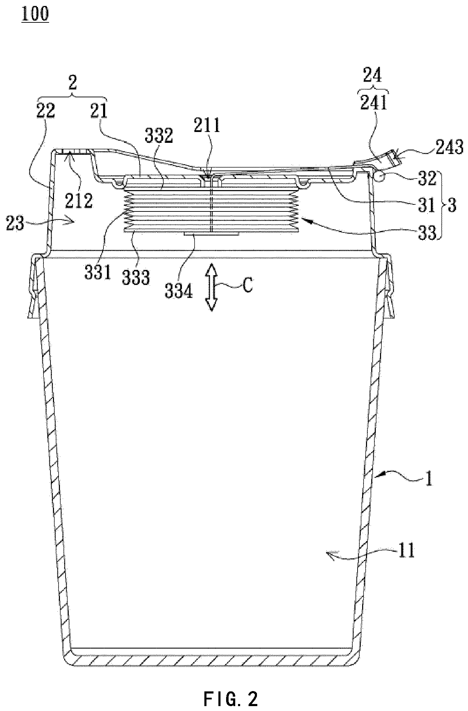

Wherein, a through hole 211 is set in approximately central portion of the top wall 21 of the lid 2. The above lid 2, an outlet 212 is formed on one side of the through hole 211 (left side as shown in FIG. 2), and a positioning part 24 is formed on another side of the through hole 211 (right side as shown in FIG. 2).

However, location of the through hole 211 may be adjusted according to the design requirements, not limited to approximately central portion of the top wall 21. For example, the through hole 211 may also be formed on the annular side wall 22.

In more detail, the positioning part 24 is a block 241 extended from the top wall 21 along the direction away from the through hole 211, and a notch 243 is formed on an end edge of the block 241 along the direction towards the through hole 211.

Furthermore, the inner edge of the bottom of the annular side wall 22 of the lid 2 is separately buckled on the cup body 1, so that the lid space 23 is communicated with the cup body space 11 and communicated with outside through the through hole 211 and the outlet 212.

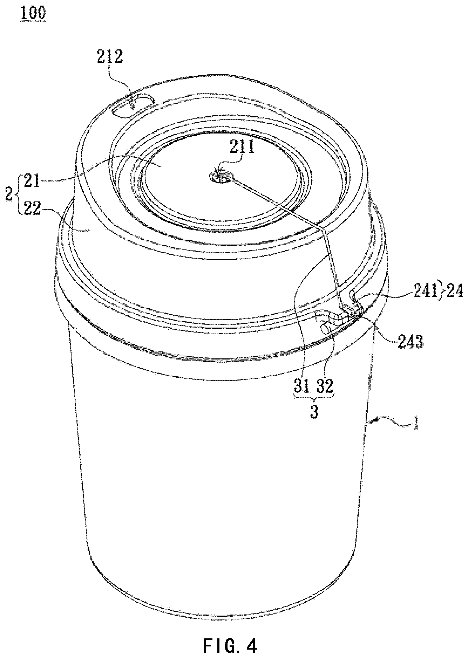

Besides, in addition to the above implement, the positioning part 24 also has other implementations. For example, as shown in FIG. 4, the positioning part 24 is a block 241 extended from annular side wall 22 along the direction away from the through hole 211, and a notch 243 is also formed concavely on the block 241.

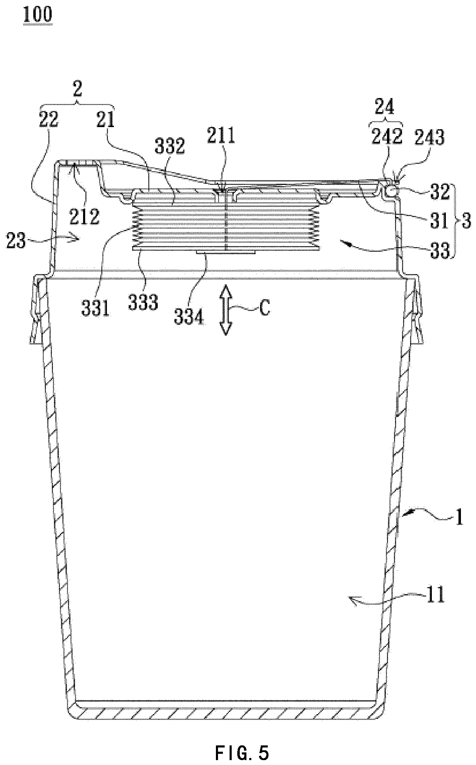

Or, as shown in FIG. 5, the positioning part 24 is a groove 242 concavely formed on the annular side wall 22, a notch 243 is concavely formed on the groove 242 near the through hole 211.

Please refer to FIG. 1 ∼ FIG. 3, the brewing substance packaging structure 3 includes a rope body 31, a positioning body 32 and a covered part 33 (such as a tea bag). The rope body 31 may be a cotton rope, a plastic rope or other material rope body.

Wherein, the rope body 31 is movably set inside the through hole 211 of the lid 2, and two ends of the rope body 31 are respectively fixed to the positioning body 32 and the covered part 33. Whereby, the positioning body 32 is located on outer edge of the lid 2 and may be selectively adjusted to a first position (as shown in FIG. 3) and a second position (as shown in FIG. 2).

Wherein, when the positioning body 32 is located in the second position, there is a specific distance between the positioning body 32 and the through hole 211. In other words, the second position is the position of the positioning body 32 away from the through hole 211 with the specific distance.

Thereinafter, structure of the positioning body 32 and the covered part 33 may be introduced respectively, and the condition of the brewing cup set 100 related to the first position and the second position may be described later.

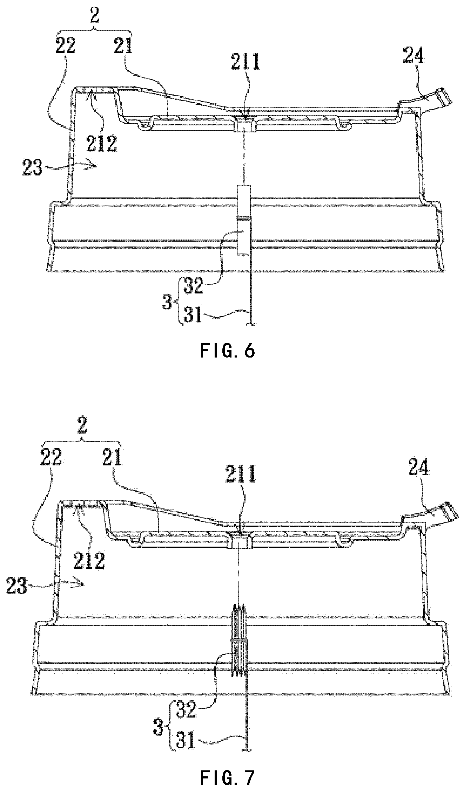

The positioning body 32 is a structure being switched to a passing mode (as shown in FIG. 6) and a stop mode (as shown in FIG. 2 or FIG. 3). Further, when the positioning body 32 is at the passing mode, the positioning body 32 may be passed through the through hole 211 from a side of the lid 2 (inner side) to another side of the lid 2 (outer side); when the positioning body 32 is at the stop mode, the positioning body 32 is set and positioned on a side of the through hole 211 of the lid 2 (outer side).

In more detail, as shown in FIG. 6, the positioning body 32 is a long-shaped rod body, which may be cylindrical shape, elliptic cylindrical shape, square pillar shape, diamond shape or long flat shape. The length of the rod body is larger than the inside diameter of the through hole 211, a section of the positioning body32 vertical to its long axis direction is provided to pass through the through hole 211 on the top wall 21 of the lid 2.

That is, the passing mode is defined as the positioning body 32 being passed through the through hole 211 along its long axis direction (as shown in FIG. 6), and the stop mode is defined as the positioning 32 not passed through the through hole 211 along the long axis direction (as shown in FIG. 2 or FIG. 3). Therefore, the positioning body 32 may be passed through the through hole 211 from the inner side of the top wall 21 of the lid 2 at the passing mode, and may be set on outer side of the top wall 21 of the lid 2 at the stop mode.

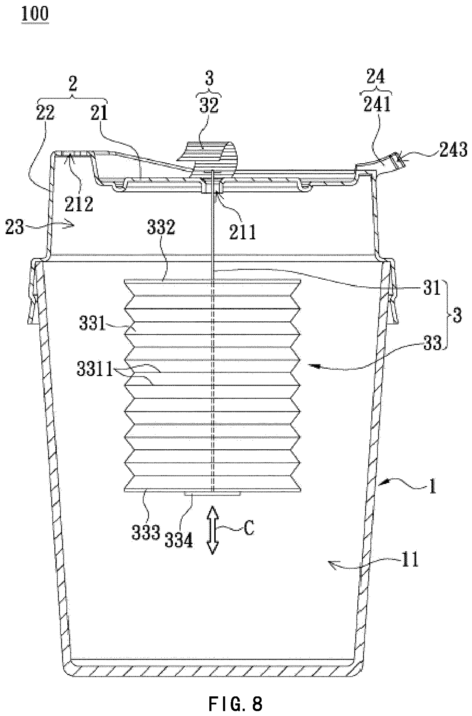

Besides, in addition to the above implement, the positioning body 32 also has other implementations. For example, as shown in FIG. 7 and FIG. 8, the positioning body 32 may be an elastic body (creased paper with elastic resilience as shown in figure) provided to be compressed (or through folding and rolling) into a structure for being passed through the through hole 211, it is defined as the passing mode; the elastic body recovers original appearance and structure after passing through the through hole 211, at this time, the elastic body cannot be passed through the through hole 211, it is defined as the stop mode. Furthermore, the elastic body may also be elastic material that deforms under extrusion and recovers without extrusion.

Or, the positioning body 32 may also be an umbrella-shaped structure (not shown in figure), that is, when the umbrella-shaped structure is close, it may be the structure that may be passed through the through hole 211, so it is defined as the passing mode at the time; when the umbrella-shaped structure is opened, the opened curved umbrella surface cannot be passed through the through hole 211, so the umbrella-shaped structure is defined as the stop mode.

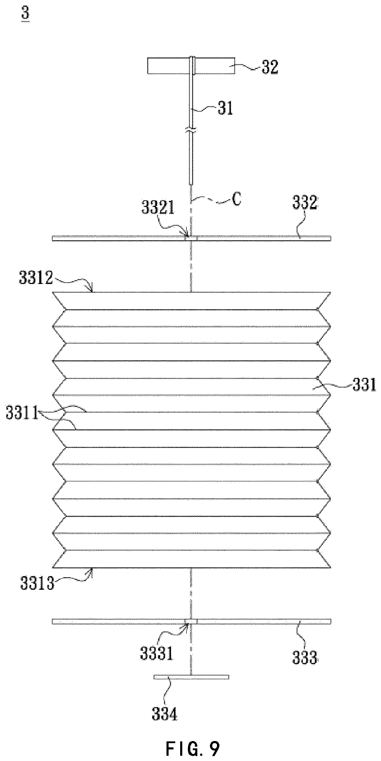

Please refer to FIG. 9, the covered part 33 includes a folded body 331, an upper lid body 332, a lower lid body 333 and a limiting body 334. Wherein, in the embodiment, the preferred implementation of the brewing substance inside the covered part 33 is original tea leaves, but it is not limited in practical application. For example, it may be herbs (such as vegetable caterpillar), coffee powder (especially not instant), health tea, or fruit tea etc.

Furthermore, the folded body 331, the upper lid body 332, the lower lid body 333 and the limiting body 334 are separate elements, namely, the covered part 33 is formed by assembly. In the following, the structure of the folded body 331, the upper lid body 332, the lower lid body 333 and the limiting body 334 may be introduced respectively with FIG. 9.

The folded body 331 is approximately hollow cylindrical shape, and a stretching direction C is defined in the inner side, the stretching direction C is equivalent to the central axis direction of the folded body 331 in the embodiment, but not limited to.

Furthermore, the section of the folded body 331 vertical to the stretching direction C is ring shape, a fold line unit 3311 approximately symmetrical to the stretching direction C is formed on the folded body 331, and two openings 3312, 3313 are formed respectively on two relative ends of the folded body 331.

In more detail, the fold line unit 3311 includes multiple alternated arranged inner fold lines and outer fold lines with shape substantially the same. In other words, each outer fold line is located between two adjacent inner fold lines. Through the fold line unit 3311, two ends of the folded body 331may be stretched or shrunk along the stretching direction C.

The structure of the upper lid body 332 and the lower lid body 333 are approximately the same, further, the upper lid body 332 and the lower lid body 333 are both circular plate shape and two positioning holes 3321, 3331 are respectively formed in their geometric center. In other words, the location of the center of the two positioning holes 3321, 3331 is approximately located in the stretching direction C (or the central axis of the folded body 331).

Wherein, compared to the folded body 331, the shape of the upper lid body 332 and the lower lid body 333 is not easy to produce deformation. Specifically, the thickness (or density, hardness) of the upper lid body 332 and the lower lid body 333 are designed as larger than the folded body 331, so that the shape of the upper lid body 332 and the lower lid body 333 is not easy to produce deformation.

The limiting body 334 is a structure which cannot be passed through the positioning hole 3331 of the lower lid body 333, for example, the limiting body 334 may be a tabular structure with area larger than the positioning hole 3331, or a long-shaped structure (such as similar to the positioning body 32) with length larger than the diameter of the positioning hole 3331.

As above, the structure of the folded body 331, the upper lid body 332, the lower lid body 333 and the limiting body 334 are illustrated, however, the assembly relationship among the folded body 331, the upper lid body 332, the lower lid body 333 and the limiting body 334 may described as follows.

Please refer to FIG. 3 and FIG. 9, the upper lid body 332 and the lower lid body 333 are respectively connected to the two relative ends of the folded body 331 (such as the top and the bottom of the folded body 331 shown in FIG. 9), to thereby cover the two openings 3312, 3313 formed by the folded body 331.

Wherein, the method of connecting the upper lid body 332 and the lower lid body 333 to two relative ends of the folded body 331 may be bonded through food-grade waterproof glue, welded in ultrasonic welding way, or other acceptable method, which is not limited herein.

The rope body 31 is passed through the positioning hole 3321 of the upper lid body 332, passed through the positioning hole 3331 of the lower lid body 333, and the rope body 31 passed through the lower lid body 333 may be fixed to the limiting body 334. It is not limited whether the limiting body 334 is connected to the lower lid body 333.

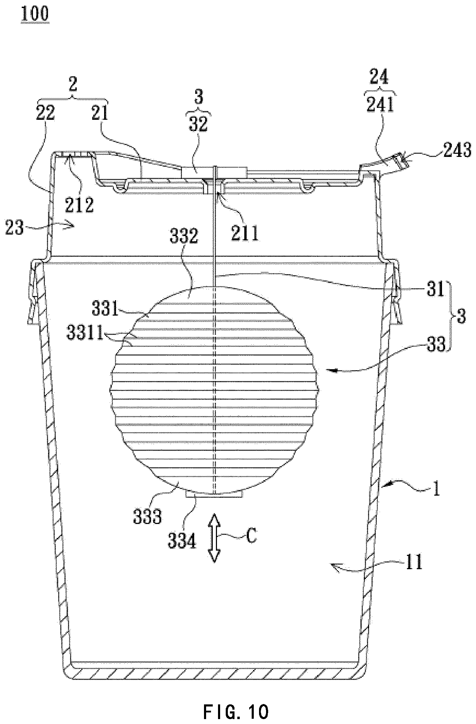

Besides, in addition to the above implementation, the covered part 33 may also have other implementations. For example, as shown in FIG. 10, the shape of the covered part 33 may be designed as spherical shape to show different style to thereby add fun to use. Similarly, the shape of the covered part 33 may also be designed as hemispherical shape, cone shape, pillar shape, or other suitable shape.

The structure of the positioning body 32 and the covered part 33 have described as above, and the actual operation and use of the brewing cup set 100, please refer to FIG. 2 and FIG. 3, may be described as follows.

It should be noted that, when a user wants to brew the covered part 33, he may put hot water inside the cup body space 11 of the cup body 1 and buckle the lid 2 on the cup body 1, so that the covered part 33 hanged on the lid 2 may be placed inside the space surrounded by the lid 2 and the cup body 1.

At this time, the positioning body 32 may be adjusted between the first position (as shown in FIG. 3) and the second position (as shown in FIG. 2), the relative position of the upper lid body 332 and the lower lid body 333 is simultaneously adjusted by moving the rope body 31, and the folded body 331 is provided to be stretched or folded along the stretching direction C through the fold line unit 3311.

In more detail, when the positioning body 32 is located in the first position, the positioning body 32 is driven by gravity of the covered part 33, so it touches the top wall 21 of the lid 2 at the stop mode and forms a through hole 211 on the outer edge, namely, the positioning body 32 is located on the outer edge of the top wall 21 of the lid 2, so that the covered part 33 is located in the cup body space 11 for brewing into hot water inside the cup body 1.

At this time, the folded body 331 may let water flow inside from the surrounding uniformly, it is beneficial for the brewing and stretching of the brewing substance (such as original tea leaves), and the stretching direction C is parallel to the plumb-line direction.

Thereafter, during brewing, the brewing substance may be expanded due to dipping in water and touch the upper lid body 332 and the lower lid body 333, so that the folded body 331 may stretch up and down naturally along the stretching direction C, and the brewing substance may have enough space for dipping and stretching.

Furthermore, due to moderate strengthen of the upper lid body 332 and the lower lid body 333, such as improvement of thickness, density, hardness), the folded body 331 may maintain original shape even when it is completely dipped in water, namely, it would not deform by the weight of brewing and stretching the carried brewing substance.

In addition, by moderate strengthening the upper lid body 332 and the lower lid body 333, when the folded body 331 is dipped in water, it would not float in any direction due to weight shift caused by the entering angle and water flow, so that the folded body 331 may surface partially and the brewing substance inside the covered part 33 may not completely be brewed. And, the folded body 331 would not sag and deform due to the increasing weight of the brewing substance after brewing and stretching and difficulty of pulling it up may not be increased.

After tea is formed by brewing the covered part 33 into hot water in the cup body 1, the positioning body 32 may be switched to the second position, at the time, the positioning body 32 is limited in the positioning part 24 of the lid 2, so as to let the covered part 33 at least partially located in the lid space 23.

That is, if level of tea is higher, most or all of the covered part 33 may be placed inside the lid space 23; if level of tea is lower, the covered part 23 may be partially placed inside the lid space, to thereby achieve the effect of separating the covered part 33 from tea.

In more detail, the rope body 31 may be passed through the notch 243 of the positioning part 24, thus the positioning body 32 may be positioned on a side away from the through hole 211, so as to let the positioning body 32 be driven by gravity of the covered part 33 and may touches the positioning part 24 located on the surface of two relative sides of the notch 243.

In the process of adjusting the positioning body 32 from the first position to the second position, the rope body 31 may pull the limiting body 334, so the covered part 33 may move towards the direction of the top wall 21 of the lid 2 (namely, it is equivalent to parallel to the plumb-line direction). When the upper lid body 332 of the covered part 33 touches the inner edge of the top wall 21 of the lid 2, the limiting body 334 is pulled by the rope body 31 and the lower lid body 333 is driven to move, so that the lower lid body 333 moves towards the upper lid body 332, and the folded body 331 is folded along the stretching direction C through the fold line unit 3311. That is, the volume of the covered part 33 of the positioning body 32 located in the second position is smaller than the volume of the covered part 33 of the positioning body 32 located in the first position.

In particular, after the positioning body 32 is adjusted from the first position to the second position, the sum of the moving distance of the top of the covered part 33 (equivalent to the upper lid body 332) and the relative moving distance of the bottom of the covered part 3 3 (equivalent to the lower lid body 333) and the covered part 33 (equivalent to the upper lid body 332) is approximately equal to the length of the rope body 31 between the through hole 211 and the positioning body 32 located in the positioning part 24.

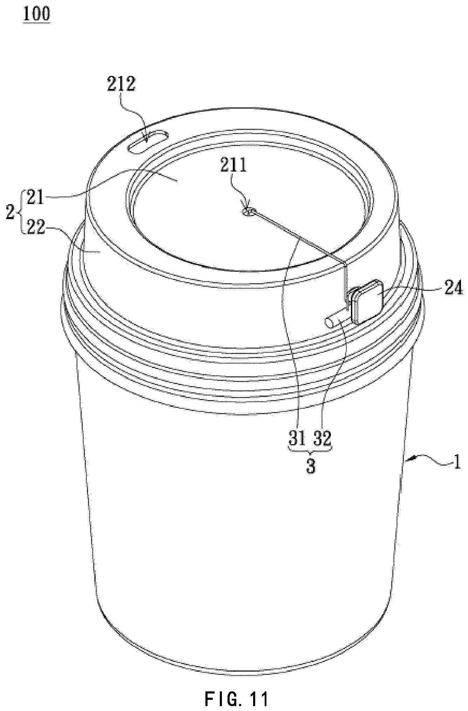

Additionally, when the folded body 331 is folded from two ends along the stretching direction C, the upper lid body 332 and the lower lid body 333 may achieve some protective effect to reduce crushing the brewing substance inside the covered part 33 due to external compression. Besides, in addition to above embodiments (through gravity), the limiting method of the positioning body 32 and the positioning part 24 may also have other variety. For example, shown in FIG. 11, the positioning part 24 is extended from the annular side wall 22 of the lid 2 and formed approximately a T-shaped structure, so that the rope body 31 exposed out of the lid 2 and near the positioning body 32 may be wound around the positioning part 24, the positioning body 32 is touched the positioning part 24, to thereby maintain the positioning body 32 in the second position.

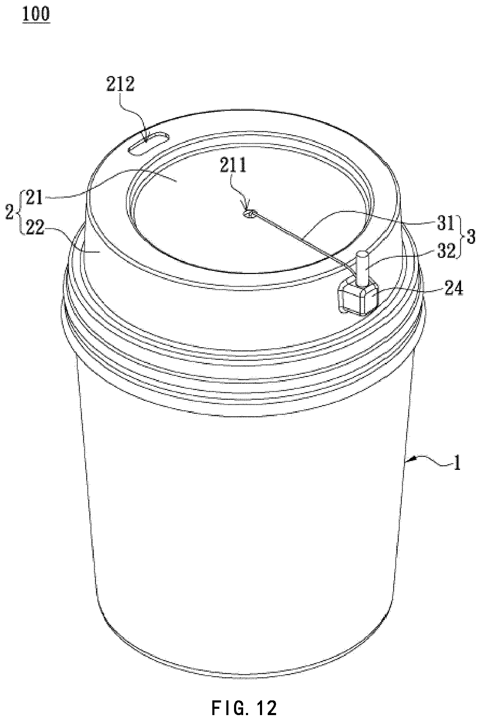

Or, as shown in FIG. 12, the positioning part 24 may be a top-down concave structure, and the positioning body 32 is longitudinally passed through and fixedly buckled to the positioning part 24, to thereby maintain the positioning body 32 in the second position.

Furthermore, the structure of fixedly buckling the positioning body 32 to the positioning part 24 is not limited to FIG. 12, the buckling method may also has other variation that cannot be listed herein.

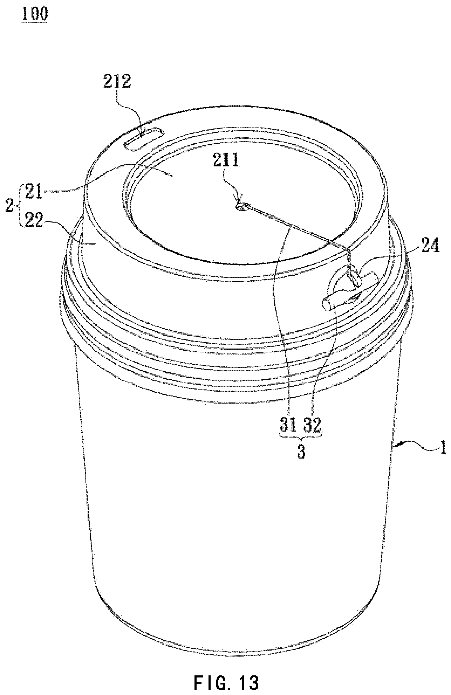

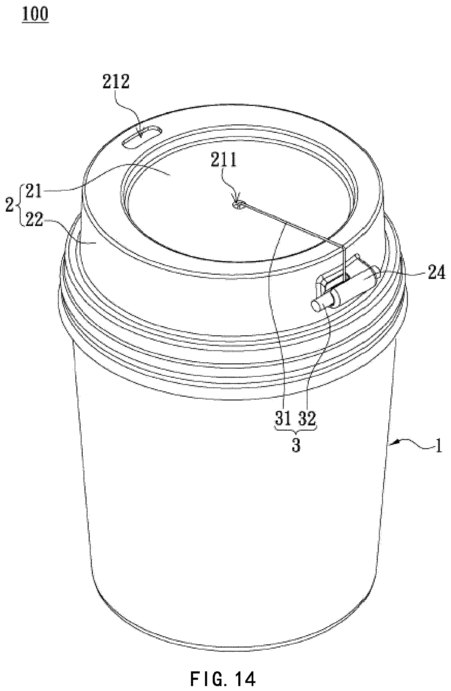

Therefore, two figures are showed here as examples. In FIG. 13, the structure of the positioning part 24 is designed for embedding the positioning body 32 inside. In FIG. 14, the structure of the positioning part 24 is designed for the positioning body 32 transversely passed through and fixed inside.

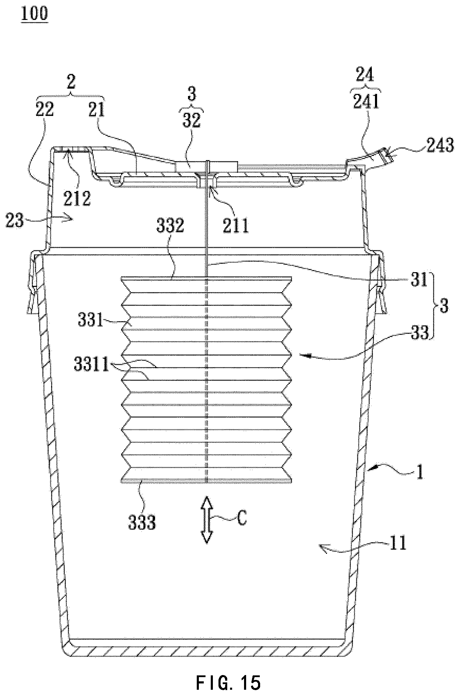

Besides, in addition to the above implementation of the embodiment, the covered part 33 may also have other variation. For example, as shown in FIG. 15, the limiting body 334 is cancelled from the covered part 33, the bottom end of the rope body 31 may be directly fixed to the lower lid body 333. Or, the rope body 31 may be tied after being passed through the positioning hole 3331 of the lower lid body 333, and the tied portion of the rope body 31 may not be passed through the positioning hole 3331 of the lower lid body 333.

Or, the upper lid body (not shown in figure) is further cancelled, so that an end of the rope body 31 is placed inside the covered part 33 and fixed to the bottom of the covered part 33. But, no meter how the covered part 33 varies, the positioning body 32 is located in the second position, the covered part 33 may be pulled by the rope body 31 and press the inner edge of the top wall 21 of the lid 2 to form a compression shape.

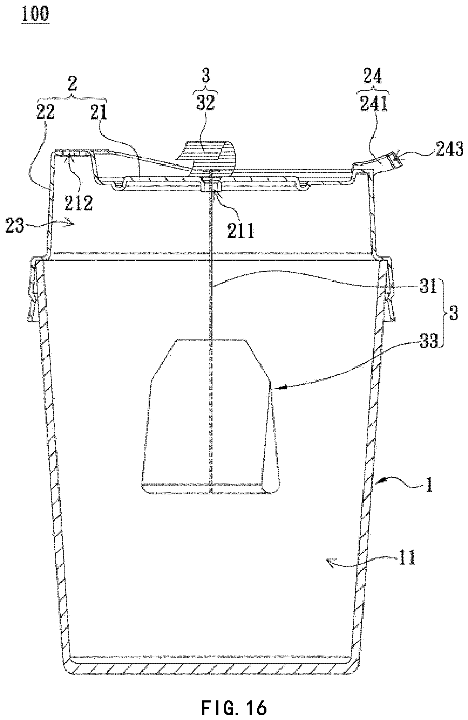

That is, the covered part 33 may also be a cylindrical bag, a oval cylindrical bag, a square cylinder bag, a three-dimensional triangular shape, or a flat bag (as shown in FIG. 16). Althrough the covered part 33 may not includes the upper lid body 332 and the lower lid body 333 simultaneously, the rope body 31 may be passed through the covered part 33 and fixed to its bottom, the covered part 33 may be pulled by the rope body 31 when the rope body 31 is pulled from an end, the covered part is equally clamped by the bottom of the covered part 33 and the top wall 21 of the lid 2, so that the volume of the covered part 33 is smaller than the volume of the covered part 33 when the positioning body 32 is located in the first position.

Or, the covered part 33 may press the plate body 21 by pulling the rope body 31, so as to the distance between two sides of the covered part 33 corresponding to the rope body 31 (equal to the height of the covered part 33), which is smaller that when the positioning body 32 is in the second position than in the first position. Namely, in the covered part 23, the distance between the fixed portion and the portion being passed by the rope body 31 is smaller that when the positioning body 32 is in the second position than in the first position.

In addition, in the embodiment, the number of the positioning part 24 of the lid 2 is one for example, but in practical application, more than one positioning part 24 may be increased between the first position and the second position, to thereby suitable for different conditions with containing different amount of water in the cup body 1.

### [Possible effects of the embodiment]

In summary, the brewing substance packaging structure of the present invention includes a structure that may easily control the covered part up and down and adjust the appearance of the covered part, namely, a user may control the covered part up and down by the positioning body outside the plate body, and the covered part form a compression shape by the rope body being passed through the covered part and the plate body, whereby the brewing substance packaging structure may meet users' needs more. Also, the above effect is obvious when the brewing substance packaging structure is applied in the lid.

For example, the user may effectively separate the covered part from tea without opening the lid and taking out of the wet covered part (such as a wet tea bag), thus the condition of water dropping everywhere and wetting hands may be prevented when taking out wet covered part.

Furthermore, due to the adjustable design of the covered part, the covered part is pressed to reduce its volume and height when separating the covered part from tea, it is easily to separate the covered part from tea.

Other, since the wet covered part has already been separated from tea without being taken out, it may solved the trouble that tea would become too strong if the covered part is brewed for a long time, and the user have to take out it and find some place to put, or is forced to throw it away. The covered part may easily be polluted by environment and air, or touched by unclean objects if being taken out and put in some place, it is not suitable to be put into the cup for brewing again; if the covered part is taken out and thrown away, it is also a waste that it only brewing one time and multiple brewing property of the covered part may not be fully enjoyed. And, the user may not be forced to drink strong tea if unable to find objects for placing wet covered part or reluctant to throw away wet covered part. Simultaneously, the user may not worry that it is troublesome to take out the covered part or the concentration of tea is not enough and brewing once for a long time. The user may pull up the positioning body at any time, and loose the positioning body to put the covered part for brewing some time if the concentration of tea is not enough, so that the user may drink tea with preferred concentration.

As above, it is only the embodiment of the present invention, and it is not provided to limit the scope of the present invention.

## Claims

1. A brewing substance packaging structure (3), which is used to place a brewing substance inside for brewing and suitable to be hanged on a plate body (21) with a through hole (211), the brewing substance packaging structure (3) includes: a covered part (33) provided for water flowing through, and the brewing substance is placed inside; a positioning body (32), which is a structure being switched to a passing mode or a stop mode, the positioning body (32) is provided to pass through the through hole (211) from a side of the plate body (21) to another side of the plate body (21) when the positioning body (32) is switched to the passing mode, the positioning body (32) is not adapted to pass through the through hole (211) of the plate body (21) when the positioning body (32) is switched to the stop mode; and a rope body (31) having a firstend fixed to the covered part (33) and a second end fixed to the positioning body (32), the positioning body (32) is used to pass through the through hole (211) of the plate body (21) and be adjusted between a first position and a second position, so that the rope body (31) is movably set inside the through hole (211) of the plate body (21); wherein, when the positioning body (32) is located in the first position, the positioning body (32) is driven by gravity of the covered part (33), so that the plate body (21) touches the positioning body (32) with the through hole part; when the positioning body (32) is located in the second position, the positioning body (32) is adjusted with a specific distance to the through hole (211), and the covered part (33) is pulled by the rope body (31) and press the plate body (21) to form a compression shape;
**characterized by** the fact that the first end of the rope body (31) is passed through one side of the covered part (33) and fixed to another side of the covered part (33), and the covered part (33) includes: a folded body (331), which is hollow and may be stretched along a stretching direction (C), a section of the folded body (331) vertical to the stretching direction (C) is ring shape, and a fold line unit (3311) is formed on the folded body (331); and an upper lid body (332) and a lower lid body (333), which are respectively set on a top (3312) and a bottom (3313) of the folded body (331), a positioning hole (3321) is formed on the upper lid body (332), the rope body (31) is passed through the positioning hole (3321) of the upper lid body (332) and fixed to the bottom of the covered part (33); wherein, when the positioning body (32) is adjusted between the first position and the second position, the relative position of the upper lid body (332) and the lower lid body (333) is simultaneously adjusted by moving the rope body (31), and the folded body (331) is provided to be stretched or folded along the stretching direction (C) through the fold line unit (3311).

2. The brewing substance packaging structure (3) as claimed in claim 1, wherein, the first end of the rope body (31) passes through the top (3312) of the folded body (331) to the bottom (3313) of the folded body (331), when the positioning body (32) is located in the second position, the covered part (33) is clamped by its bottom and the plate body (21) due to pull of the rope body (31), so that the volume of the covered part (33) is smaller than the volume of the covered part (33) when the positioning body (32) is located in the first position, or, the covered part (33) is pulled by the rope body (31) to press the plate body (21), so that when the positioning body (32) located in the second position, the distance between the two sides of the covered part (33) corresponding to the rope body (31) is smaller than the distance that when the positioning body (32) located in the first position.

3. The brewing substance packaging structure (3) as claimed in claim 1, wherein, the covered part (33) further includes a limiting body (334), a further positioning hole (3331) is formed on the lower lid body (333), the limiting body (334) is unsuitable for passing through the positioning hole (3331), and the rope body (31) is passed through the further positioning hole (3331) of the lower lid body (333) and fixed on the limiting body (334).

4. The brewing substance packaging structure (3) as claimed in claim 3, wherein, the positioning hole (3321) of the upper lid body (332) is approximately located in the geometric center of the upper lid body (332), and the positioning hole (3331) of the lower lid body (333) is approximately located in the geometric center of the lower lid body (333).

5. The brewing substance packaging structure (3) as claimed in claim 4, wherein, two openings (3312, 3313) are formed respectively on the top and the bottom of the folded body (331), the upper lid body (332) and the lower lid body (333) are respectively connected to the top and the bottom of the folded body (331) to cover the two openings (3312, 3313).

6. The brewing substance packaging structure (3) as claimed in any one of claims 1 to 5, wherein, the positioning body (32) has an elongated shape, and its length is larger than an inside diameter of the through hole (211), a section of the positioning body (32) vertical to its long axis direction is provided to pass through the through hole (211), the passing mode is defined as the positioning body (32) being passed through the through hole (211) along its long axis direction, and the stop mode is defined as the positioning body (32) not passed through the through hole (211) along the long axis direction, the positioning body (32) is passed through the through hole (211) from a side of the plate body (21) at the passing mode, and hanged on another side of the plate body (21) at the stop mode.

7. The brewing substance packaging structure (3) as claimed in any one of claims 1 to 5, wherein, the positioning body (32) is further limited to an elastic body, the passing mode is defined as the elastic body being compressed into a structure for passing through the through hole (211); the stop mode is defined as the elastic body being recovered to a structure that cannot pass through the through hole (211); the positioning body (32) is passed through the through hole (211) from a side of the plate body (21) at the passing mode, and hanged on another side of the plate body (21) at the stop mode.

8. The brewing substance packaging structure (3) as claimed in any one of claims 1 to 5, the feature is, when the positioning body (32) is adjusted between the first position and the second position, the moving direction and the stretching direction (C) of the covered part (33) is parallel to a plumb-line.

9. The brewing substance packaging structure (3) as claimed in any one of claims 1 to 5, the feature is, after the positioning body (32) is adjusted to the second position from the first position, the sum of the moving distance of the top of the covered part (33) and the relative moving distance of the bottom and the top of the packaging structure is equivalent to the length of the rope body (31) between the through hole (211) and the positioning body (32) located away from the specific distance.

## Patentansprüche

1. Verpackungsstruktur für eine Brausubstanz (3), die verwendet wird, um eine Brausubstanz in dieselbe zu platzieren, um zu Brauen, und geeignet, auf einen Plattenkörper (21) mit einem Durchgangsloch (211) gehängt zu werden, wobei die Verpackungsstruktur für eine Brausubstanz (3) Folgendes beinhaltet: einen abgedeckten Teil (33), der bereitgestellt ist, damit Wasser durchfließt und die Braustubstanz darin platziert ist; einen Positionierungskörper (32), wobei es sich um eine Struktur handelt, die in einen Durchgangsmodus oder Stoppmodus geschaltet ist, wobei der Positionierungskörper (32) bereitgestellt ist, um durch das Durchgangsloch (211) von einer Seite des Plattenkörpers (21) zu einer anderen Seite des Plattenkörpers (21) zu verlaufen, wenn der Positionierungskörper (32) in den Durchgangsmodus geschaltet ist, der Positionierungskörper (32) nicht ausgelegt ist, um durch das Durchgangsloch (211) des Plattenkörpers (21) zu verlaufen, wenn der Positionierungskörper (32) in den Stoppmodus geschaltet ist; und einen Seilkörper (31), der ein erstes Ende aufweist, das an den abgedeckten Teil (33) fixiert ist, und ein zweites Ende, das an den Positionierungskörper (32) fixiert ist, der Positionierungskörper (32) verwendet wird, um durch das Durchgangsloch (211) des Plattenkörpers (21) zu verlaufen, und zwischen einer ersten Position und einer zweiten Position angepasst zu sein, so dass der Seilkörper (31) beweglich innerhalb des Durchgangslochs (211) des Plattenkörpers (21) festgesetzt ist; wobei, wenn sich der Positionierungskörper (32) in der ersten Position befindet, der Positionierungskörper (32) durch die Schwerkraft des abgedeckten Teils (33) angetrieben wird, so dass der Plattenkörper (21) den Positionierungskörper (32) mit dem Durchgangslochteil berührt; wenn sich der Positionierungskörper (32) in der zweiten Position befindet, der Positionierungskörper (32), mit einer spezifischen Distanz zum Durchgangskörper (211) angepasst wird, und der abgedeckte Teil (33) durch den Seilkörper (31) gezogen wird und den Plattenkörper (21) drückt, um eine Kompressionsform zu bilden;
**dadurch gekennzeichnet, dass** das erste Ende des Seilkörpers (31) durch eine Seite des abgedeckten Teils (33) geführt wird und an eine andere Seite des abgedeckten Teils (33) fixiert wird und der abgedeckte Teil (33) Folgendes beinhaltet: einen gefalteten Körper (331), der hohl ist und entlang einer Streckrichtung (C) gestreckt werden kann, ein Abschnitt des gefalteten Körpers (331) vertikal zur Streckrichtung (C) eine Ringform ist, und eine Faltlinieneinheit (3311) auf dem gefalteten Körper (331) gebildet ist; und ein oberer Deckelkörper (332) und ein unterer Deckelkörper (333), die jeweils auf einer oberen Seite (3312) und einer unteren Seite (3313) des gefalteten Körpers (331) festgesetzt sind, ein Positionierungsloch (3321) auf dem oberen Deckelkörper (332) gebildet ist, der Seilkörper (31) durch das Positionierungsloch (3321) des oberen Deckelkörpers (332) geführt und an die untere Seite des abgedeckten Teils (33) fixiert ist; wobei, wenn der Positionierungskörper (32) zwischen der ersten Position und der zweiten Position angepasst ist, die relative Position des oberen Deckelkörpers (332) und des unteren Deckelkörpers (333) gleichzeitig durch die Bewegung des Seilkörpers (31) angepasst ist und der gefaltete Körper (331) bereitgestellt ist, um entlang der Streckrichtung (C) durch die Faltlinieneinheit (3311) gestreckt oder gefaltet zu werden.

2. Verpackungsstruktur für eine Brausubstanz (3) nach Anspruch 1, wobei das erste Ende des Seilkörpers (31) durch die obere Seite (3312) des gefalteten Körpers (331) zur unteren Seite (3313) des gefalteten Körpers (331) verläuft, wenn sich der Positionierungskörper (32) in der zweiten Position befindet, der abgedeckte Teil (33) durch seine untere Seite und den Plattenkörper (21) aufgrund des Zugs des Seilkörpers (31) geklemmt ist, so dass das Volumen des abgedeckten Teils (33) kleiner als das Volumen des abgedeckten Teils (33) ist, wenn sich der Positionierungskörper (32) in der ersten Position befindet, oder der abgedeckte Teil (33) vom Seilkörper (31) gezogen wird, um den Plattenkörper (21) zu drücken, so dass, wenn sich der Positionierungskörper (32) in der zweiten Position befindet, die Distanz zwischen den zwei Seiten des abgedeckten Teils (33), die dem Seilkörper (31) entspricht, kleiner als die Distanz ist, wenn sich der Positionierungskörper (32) in der ersten Position befindet.

3. Verpackungsstruktur für eine Brausubstanz (3) nach Anspruch 1, wobei der abgedeckte Teil (33) weiter einen Begrenzungskörper (334) umfasst, ein weiteres Positionierungsloch (3331) auf einem unteren Deckelkörper (333) gebildet ist, der Begrenzungskörper (334), nicht geeignet ist, um durch das Positionierungsloch (3331) zu verlaufen, und der Seilkörper (31) durch das weitere Positionierungsloch (3331) des unteren Deckelkörpers (333) geführt wird und auf dem Begrenzungskörper (334) fixiert ist.

4. Verpackungsstruktur für eine Brausubstanz (3) nach Anspruch 3, wobei sich das Positionierungsloch (3321) des oberen Deckelkörpers (332) ungefähr im geometrischen Zentrum des oberen Deckelkörpers (332) befindet und sich das Positionierungsloch (3331) des unteren Deckelkörpers (333) ungefähr im geometrischen Zentrum des unteren Deckelkörpers (333) befindet.

5. Verpackungsstruktur für eine Brausubstanz (3) nach Anspruch 4, wobei zwei Öffnungen (3312, 3313) jeweils auf der oberen Seite und der unteren Seite des gefalteten Körpers (331) gebildet sind, der obere Deckelkörper (332) und der untere Deckkörper (333) jeweils mit der oberen Seite und der unteren Seite des gefalteten Körpers (331) verbunden sind, um die zwei Öffnungen (3312, 3313) abzudecken.

6. Verpackungsstruktur für eine Brausubstanz (3) nach einem der Ansprüche 1 bis 5, wobei der Positionierungskörper (32) eine verlängerte Form aufweist und seine Länge grösser als ein Innendurchmesser des Durchgangslochs (211) ist, ein Abschnitt des Positionierungskörpers (32) vertikal zur Richtung seiner Längsachse bereitgestellt ist, um durch das Durchgangsloch (211) zu verlaufen, der Durchgangsmodus so definiert ist, dass der Positionierungskörper (32) durch das Durchgangsloch (211) entlang der Richtung seiner Längsachse geführt wird und der Stoppmodus so definiert ist, dass der Positionierungskörper (32) nicht durch das Durchgangsloch (211) entlang der Richtung der Längsachse geführt wird, der Positionierungskörper (32) durch das Durchgangsloch (211) von einer Seite des Plattenkörpers (21) im Durchgangsmodus geführt wird und an eine andere Seite des Plattenkörpers (21) im Stoppmodus gehängt ist.

7. Verpackungsstruktur für eine Brausubstanz (3) nach einem der Ansprüche 1 bis 5, wobei der Positionierungskörper (32) weiter auf einen elastischen Körper begrenzt ist, der Durchgangsmodus so definiert ist, dass der elastische Körper in eine Struktur komprimiert ist, um durch das Durchgangsloch (211) zu verlaufen, der Stoppmodus so definiert ist, dass der elastische Körper erneut in eine Struktur gebracht wird, die nicht durch das Durchgangsloch (211) verlaufen kann; der Positionierungskörper (32) durch das Durchgangsloch (211) von einer Seite des Plattenkörpers (21) im Durchgangsmodus geführt wird und an eine andere Seite des Plattenkörpers (21) im Stoppmodus gehängt ist.

8. Verpackungsstruktur für eine Brausubstanz (3) nach einem der Ansprüche 1 bis 5, **dadurch gekennzeichnet, dass** wenn der Positionierungskörper (32) zwischen der ersten Position und der zweiten Position angepasst ist, die Bewegungsrichtung und die Streckrichtung (C) des abgedeckten Teils (33) parallel zu einer Lotrechten ist.

9. Verpackungsstruktur für eine Brausubstanz (3) nach einem der Ansprüche 1 bis 5, **dadurch gekennzeichnet, dass**, nachdem der Positionierungskörper (32) aus der ersten Position in die zweite Position angepasst ist, die Summe der Bewegungsdistanz der oberen Seite des abgedeckten Teils (33) und die relative Bewegungsdistanz der unteren Seite und der oberen Seite der Verpackungsstruktur gleich der Länge des Seilkörpers (31) zwischen dem Durchgangsloch (211) und dem Positionierungskörper (32) ist, der sich entfernt von der spezifischen Distanz befindet.

## Revendications

1. Structure de conditionnement de substance à infuser (3), qui est utilisée pour y placer à l'intérieur, en vue d'une infusion, une substance à infuser, et appropriée pour être suspendue à un corps en plaque (21) ayant un trou traversant (211), la structure de conditionnement de substance à infuser (3) comprend : une partie de recouvrement (33) prévue pour que de l'eau s'écoule à travers elle, et la substance à infuser est placée à l'intérieur ; un corps de positionnement (32), qui est une structure que l'on fait passer à un mode de passage ou un mode d'arrêt, le corps de positionnement (32) est agencé pour passer à travers le trou traversant (211) à partir d'un côté du corps en plaque (21) jusqu'à un autre côté du corps en plaque (21) lorsque le corps de positionnement (32) est amené à passer au mode de passage, le corps de positionnement (32) n'est pas apte à passer à travers le trou traversant (211) du corps en plaque (21) lorsque le corps de positionnement (32) est amené à passer au mode d'arrêt ; et un corps de cordon (31) ayant une première extrémité fixée à la partie de recouvrement (33) et une seconde extrémité fixée au corps de positionnement (32), le corps de positionnement (32) est utilisé pour passer à travers le trou traversant (211) du corps en plaque (21) et être ajusté entre une première position et une seconde position, de telle sorte que le corps de cordon (31) est placé de manière mobile à l'intérieur du trou traversant (211) du corps en plaque (21) ; dans laquelle, lorsque le corps de positionnement (32) se trouve dans la première position, le corps de positionnement (32) est entraîné par la gravité de la partie de recouvrement (33), de telle sorte que le corps en plaque (21) touche le corps de positionnement (32) avec la partie de trou traversant ; lorsque le corps de positionnement (32) se trouve dans la seconde position, le corps de positionnement (32) est ajusté avec une distance spécifique par rapport au trou traversant (211), et la partie de recouvrement (33) est tirée par le corps de cordon (21) et appuie sur le corps en plaque (21) pour former une forme de compression ;
**caractérisée par le fait que** la première extrémité du corps de cordon (31) est amenée à passer à travers un côté de la partie de recouvrement (33) et est fixée à un autre côté de la partie de recouvrement (33), et la partie de recouvrement (33) comprend : un corps plié (331), qui est creux et peut être étiré le long d'une direction d'étirement (C), une section du corps plié (331) orthogonale à la direction d'étirement (C) est de forme annulaire, et une unité de ligne de pliage (3311) est formée sur le corps plié (331) ; et un corps de couvercle supérieur (332) et un corps de couvercle inférieur (333), qui sont respectivement placés sur une partie supérieure (3312) et une partie inférieure (3313) du corps plié (331), un trou de positionnement (3321) est formé sur le corps de couvercle supérieur (332), le corps de cordon (31) est amené à passer à travers le trou de positionnement (3321) du corps de couvercle supérieur (332) et est fixé à la partie inférieure de la partie de recouvrement (33) ; dans laquelle, lorsque le corps de positionnement (32) est ajusté entre la première position et la seconde position, la position relative du corps de couvercle supérieur (332) et du corps de couvercle inférieur (333) est ajustée simultanément par déplacement du corps de cordon (31), et le corps plié (331) est agencé pour être étiré ou plié le long de la direction d'étirement (C) par l'intermédiaire de l'unité de ligne de pliage (3311).

2. Structure de conditionnement de substance à infuser (3) selon la revendication 1, dans laquelle la première extrémité du corps de cordon (31) passe à travers la partie supérieure (3312) du corps plié (331) jusqu'à la partie inférieure (3313) du corps plié (331), lorsque le corps de positionnement (32) se trouve dans la seconde position, la partie de recouvrement (33) est serrée par sa partie inférieure et le corps en plaque (21) en raison d'une traction du corps de cordon (31), de telle sorte que le volume de la partie de recouvrement (33) est plus petit que le volume de la partie de recouvrement (33) lorsque le corps de positionnement (32) se trouve dans la première position, ou la partie de recouvrement (33) est tirée par le corps de cordon (31) pour appuyer sur le corps en plaque (21), de telle sorte que, lorsque le corps de positionnement (32) se trouve dans la seconde position, la distance entre les deux côtés de la partie de recouvrement (33) correspondant au corps de cordon (31) est plus petite que la distance lorsque le corps de positionnement (32) se trouve dans la première position.

3. Structure de conditionnement de substance à infuser (3) selon la revendication 1, dans laquelle la partie de recouvrement (33) comprend en outre un corps de limitation (334), un trou de positionnement (3331) supplémentaire est formé sur le corps de couvercle inférieur (333), le corps de limitation (334) n'est pas apte à passer à travers le trou de positionnement (3331), et le corps de cordon (31) est amené à passer à travers le trou de positionnement (3331) supplémentaire du corps de couvercle inférieur (333) et est fixé sur le corps de limitation (334).

4. Structure de conditionnement de substance à infuser (3) selon la revendication 3, dans laquelle le trou de positionnement (3321) du corps de couvercle supérieur (332) est situé approximativement au centre géométrique du corps de couvercle supérieur (332), et le trou de positionnement (3331) du corps de couvercle inférieur (333) est situé approximativement au centre géométrique du corps de couvercle inférieur (333).

5. Structure de conditionnement de substance à infuser (3) selon la revendication 4, dans laquelle deux ouvertures (3312, 3313) sont formées respectivement sur les parties supérieure et inférieure du corps plié (331), le corps de couvercle supérieur (332) et le corps de couvercle inférieur (333) sont respectivement reliés aux parties supérieure et inférieure du corps plié (331) pour couvrir les deux ouvertures (3312, 3313).

6. Structure de conditionnement de substance à infuser (3) selon l'une quelconque des revendications 1 à 5, dans laquelle le corps de positionnement (32) a une forme allongée, et sa longueur est plus grande qu'un diamètre intérieur du trou traversant (211), une section du corps de positionnement (32) orthogonale à sa direction d'axe longitudinal est disposée pour passer à travers le trou traversant (211), le mode de passage est défini comme étant le passage du corps de positionnement (32) à travers le trou traversant (211) le long de sa direction d'axe longitudinal, et le mode d'arrêt est défini comme étant un non-passage du corps de positionnement (32) à travers le trou traversant (211) le long de la direction d'axe longitudinal, le corps de positionnement (32) est amené à passer à travers le trou traversant (211) à partir d'un côté du corps en plaque (21) dans le mode de passage et est suspendu à un autre côté du corps en plaque (21) dans le mode d'arrêt.

7. Structure de conditionnement de substance à infuser (3) selon l'une quelconque des revendications 1 à 5, dans laquelle le corps de positionnement (32) est en outre limité à un corps élastique, le mode de passage est défini comme étant une compression du corps élastique en une structure pour passer à travers le trou traversant (211) ; le mode d'arrêt est défini comme étant un rétablissement du corps élastique à une structure qui ne peut pas passer à travers le trou traversant (211) ; le corps de positionnement (32) est amené à passer à travers le trou traversant (211) à partir d'un côté du corps en plaque (21) dans le mode de passage et est suspendu à un autre côté du corps en plaque (21) dans le mode d'arrêt.

8. Structure de conditionnement de substance à infuser (3) selon l'une quelconque des revendications 1 à 5, dans laquelle la caractéristique est que, lorsque le corps de positionnement (32) est ajusté entre la première position et la seconde position, la direction de déplacement et la direction d'étirement (C) de la partie de recouvrement (33) sont parallèles à une ligne verticale.

9. Structure de conditionnement de substance à infuser (3) selon l'une quelconque des revendications 1 à 5, dans laquelle la caractéristique est que, une fois que le corps de positionnement (32) est ajusté dans la seconde position à partir de la première position, la somme de la distance de déplacement de la partie supérieure de la partie de recouvrement (33) et de la distance de déplacement relatif des parties inférieure et supérieure de la structure de conditionnement est équivalente à la longueur du corps de cordon (31) entre le trou traversant (211) et le corps de positionnement (32) se trouvant à l'écart de la distance spécifique.
